# FASCICULE DE BREVET EUROPEEN

(11) **EP 2 122 379 B1**
(45) Date de publication et mention de la délivrance du brevet: **23.03.2016**
(21) Numéro de dépôt: 07870376.6
(22) Date de dépôt: 04.12.2007
(51) Int. Cl.: G01R 31/36, H01M 10/44, H02J 7/00

(54) **PROCEDE DE DETERMINATION DU SEUIL DE FIN DE DECHARGE D'UNE BATTERIE RECHARGEABLE**
VERFAHREN ZUR BESTIMMUNG DER ENTLADUNGSENDSCHWELLE EINES AKKUS
METHOD FOR DETERMINING THE DISCHARGE END THRESHOLD OF A RECHARGEABLE BATTERY

(30) Priorité: 22.12.2006 FR 0611277
(43) Date de publication de la demande: 25.11.2009
(73) Titulaire: Commissariat à l'Énergie Atomique et aux Énergies Alternatives, 75015 Paris (FR)
(72) Inventeur: DELAILLE, Arnaud, 73000 Bassens (FR); PERRIN, Marion, 73420 Mery (FR)
(74) Mandataire: Hecké, Gérard
(86) Numéro de dépôt international: PCT/FR2007/001989
(87) Numéro de publication internationale: WO 2008/081106

(56) Documents cités:
- FR-A1- 2 811 486
- US-A- 6 023 151
- US-B1- 6 181 103
- US-B1- 6 204 634
- US-B1- 6 255 801
- PASCOE P E ET AL: "ESTIMATION OF VRLA BATTERY CAPACITY USING THE ANALYSIS OF THE COUP DE FOUET REGION" INTELEC '99. 21ST.INTERNATIONAL TELECOMMUNICATIONS ENERGY CONFERENCE. COPENHAGEN, JUNE 6 - 9, 1999, INTELEC. INTERNATIONAL TELECOMMUNICATIONS ENERGY CONFERENCE, NEW YORK, NY : IEEE, US, 6 juin 1999 (1999-06-06), pages 6-1, XP000868410 ISBN: 0-7803-5625-X
- ANBUKY A H ET AL: "Knowledge based VRLA battery monitoring and health assessment" 10 septembre 2000 (2000-09-10), TELECOMMUNICATIONS ENERGY CONFERENCE, 2000. INTELEC. TWENTY-SECOND INTERNATIONAL SEPTEMBER 10-14, 2000, PISCATAWAY, NJ, USA,IEEE, PAGE(S) 687-694 , XP010523260 ISBN: 0-7803-6407-4 le document en entier

## Description

### Domaine technique de l'invention

L'invention concerne un procédé de détermination du seuil de fin de décharge d'une batterie rechargeable.

### État de la technique

Les accumulateurs électrochimiques, ou batteries rechargeables, sont utilisés dans de nombreuses applications mobiles, du type électroniques portables, véhicules thermiques, électriques ou hybrides, etc..., ou de nombreuses applications stationnaires, du type relais de télécommunication, production d'électricité à partir de sources d'énergie intermittentes, telles que l'éolien ou le photovoltaïque, etc..., assurant dans chacun des cas un élément aussi primordial que fragile.

Afin d'optimiser leur durée de vie au sein de ces différentes applications, il est généralement de rigueur de protéger les batteries rechargeables contre toute décharge profonde, la plupart du temps synonyme de dégradation prématurée, voire dans certains cas d'impossibilité de recharge. Aussi, dans toutes les applications dans lesquelles les batteries rechargeables sont susceptibles d'atteindre des états de décharge profonds, des seuils bas de tension LVD (« Low Voltage Disconnect » en anglais) sont utilisés pour stopper la décharge.

Une fois ce seuil de tension atteint, la batterie est déconnectée. Les valeurs des seuils de fin de décharge pour différents régimes de décharge sont initialement déterminées lors du développement d'un nouveau type de batteries par des mesures très empiriques, nombreuses, longues et donc coûteuses. De plus, un ajustement optimal de ces seuils de tension est très délicat. Si ces seuils de tension tiennent compte en effet de la technologie de la batterie ou encore du dimensionnement du système, ils sont néanmoins maintenus constants durant toute la durée de fonctionnement de la batterie. Or, la tension d'une batterie dépend à la fois de sa technologie, mais également de ses conditions de fonctionnement, à savoir le courant de charge ou de décharge, la période de relaxation, la température, et pour finir de son état de santé, ou de son état d'usure.

Dans le cas d'une batterie pouvant comporter une mise en série d'éléments, une inhomogénéité entre les éléments peut elle-même avoir une incidence sur la tension mesurée aux bornes de la batterie complète. En d'autres termes, il n'existe pas de relation directe, ou du moins qu'une relation approximative, entre la tension d'une batterie et son état de charge. Les critères en tension utilisés à l'heure actuelle ne sont donc pas en mesure d'apprécier pleinement la profondeur de décharge des batteries rechargeables en intégrant l'ensemble des contributions décrites ci-dessus. Selon les conditions de fonctionnement ou de vieillissement de la batterie ou des éléments, ces seuils de tension tendent donc à ne pas être idéaux, et peuvent même dans certains cas conduire à une dégradation prématurée de la batterie.

Enfin, il est à noter que pour se prémunir contre de tels dommages, les seuils de fin de décharge utilisés pour stopper la décharge sont très largement surévalués au sein des régulateurs actuels, de manière à s'assurer de ne jamais descendre en dessous du seuil d'état de charge réellement critique. Pour prendre l'exemple des batteries plomb-acide utilisées dans les systèmes photovoltaïques, le seuil de fin de décharge est généralement voisin de 1.9V/élément (soit 11.4V pour une batterie de 6 éléments), quelles que soient les conditions d'usure ou de fonctionnement des batteries. Or, les batteries plomb-acide pourraient la plupart du temps être utilisées jusqu'à un seuil proche de 1.8V/élément (soit 10.8V pour une batterie de 6 éléments), sans aucune conséquence néfaste pour leur utilisation. Il en résulte un manque d'énergie de stockage, pouvant atteindre près de 10 % de la capacité de la batterie. La gestion de la fin de décharge d'une batterie rechargeable n'est donc pas optimale.

### Objet de l'invention

L'objet de l'invention consiste à réaliser un procédé de détermination du seuil de fin de décharge d'une batterie rechargeable, qui soit efficace, simple à réaliser et qui permette d'améliorer la gestion de la fin de décharge de la batterie.

Ce but est atteint par le procédé selon les revendications annnexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 illustre, sous forme d'organigramme, un procédé de gestion d'une batterie rechargeable,
- la figure 2 illustre, sous forme d'un organigramme, l'étape de décharge apparente sur l'organigramme de la figure 1,
- la figure 3 illustre, sous forme d'organigramme, l'étape de charge apparente sur l'organigramme de la figure 1, laquelle incorpore des étapes d'un mode particulier de réalisation d'un procédé de détermination selon l'invention,
- les figures 4 et 5 illustrent, sous forme d'organigramme, deux variantes d'un procédé de détermination du seuil de fin de décharge initial d'un nouveau type de batterie,
- la figure 6 représente, en fonction du temps, les variations de la tension U aux bornes d'une batterie pleinement déchargée lors du début d'une charge,
- la figure 7 représente l'évolution des paramètres électriques d'un effet coup de fouet en charge, lors de charges partielles réalisées dans des conditions similaires à 0,1 C₁₀, à la suite de décharges interrompues respectivement à des seuils de fin de décharge de 1,95V (courbe A1), 1,90V (courbe A2), 1,80V (courbe A3), et 1,70V (courbe A4).

### Description d'un mode préférentiel de l'invention

Dans la description qui suit, le terme batterie englobe aussi bien les batteries que les cellules électrochimiques. Les niveaux de tension donnés à titre d'illustration seront donnés pour une batterie au plomb et correspondent aux valeurs par élément de batterie.

De manière classique, une source d'énergie alimente une charge, par l'intermédiaire par exemple d'une batterie. Les cycles de décharge et de charge de la batterie sont gérés par un dispositif de contrôle, relié aux bornes de la batterie et mesurant, par exemple, la tension aux bornes de la batterie. Généralement, le dispositif de contrôle commande la décharge de la batterie, par l'actionnement d'un premier interrupteur destiné notamment à déconnecter la batterie après décharge. Le dispositif de contrôle commande la charge de la batterie, grâce à la source d'énergie, par l'actionnement d'un second interrupteur. Ainsi, la gestion de la décharge d'une batterie rechargeable, intégrant en particulier le procédé de détermination du seuil de fin de décharge selon l'invention et qui sera décrit ci-après, peut être mise en oeuvre dans le dispositif de contrôle par tout moyen approprié, et, plus particulièrement, au moyen d'un microprocesseur dans lequel les différentes étapes du procédé de détermination du seuil de fin de décharge sont programmées.

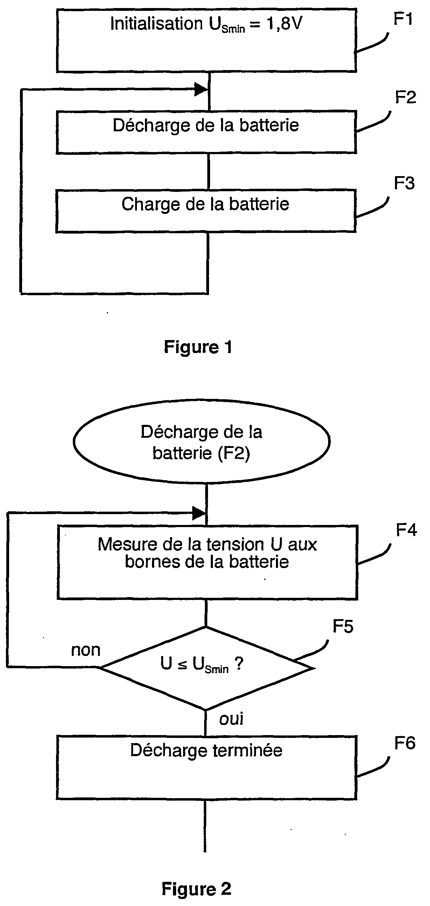

La figure 1 illustre, sous forme d'organigramme, un procédé connu de gestion d'une batterie rechargeable. De manière classique, dans une étape F1, le dispositif de contrôle initialise la valeur du seuil de fin de décharge pour déterminer le seuil de fin de décharge initial U_{Smin} qui sera utilisé comme critère de fin de décharge dans la suite du procédé, notamment dans l'étape suivante (F2) du procédé, c'est-à-dire l'étape de décharge de la batterie. Par exemple, la valeur de 1,8V est affectée à U_{Smin}. L'étape F1 correspond à la première étape du procédé de gestion, laquelle étape précède une suite de cycles de charge et de décharge comme décrit ci-dessous.

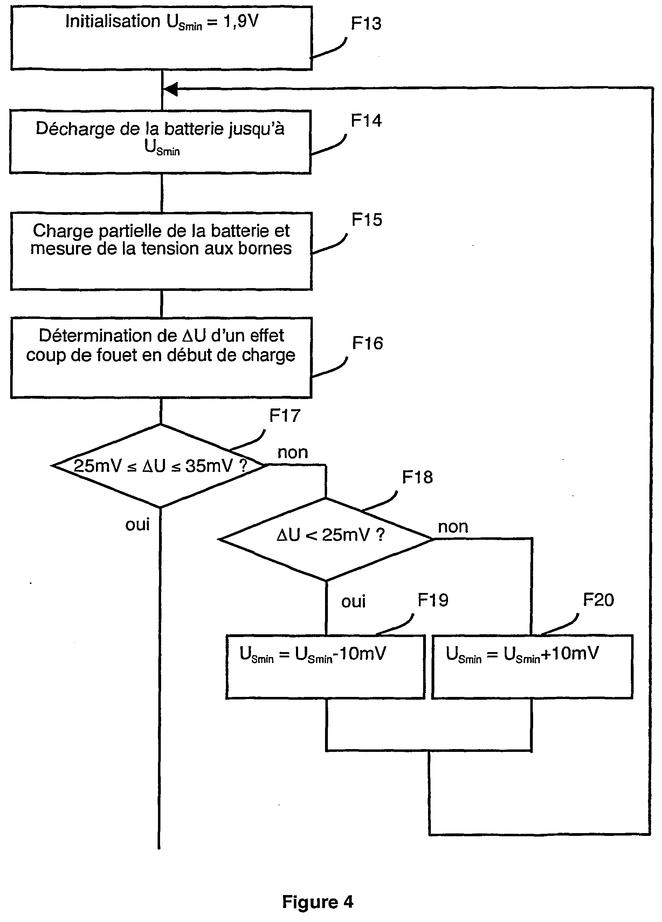

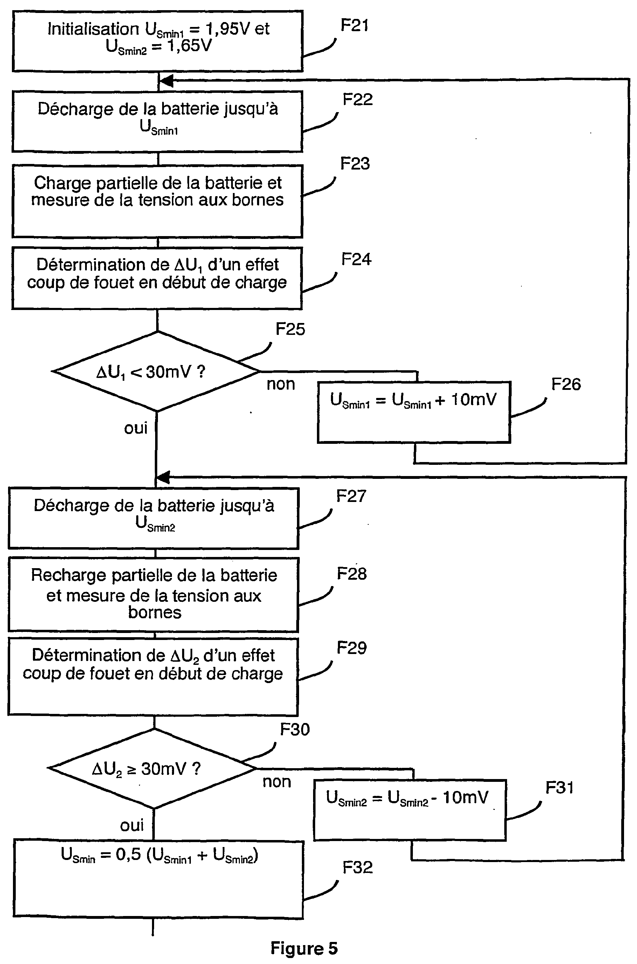

La valeur affectée à U_{Smin} correspond soit à une valeur prédéterminée au cours d'expériences pratiquées lors du développement de ce type de batterie préalablement à la commercialisation, soit à une valeur déterminée par les procédés représentés par les organigrammes des figures 4 et 5 et qui seront décrits plus loin.

En supposant que la batterie est chargée au début du procédé de gestion, et de manière connue, le dispositif de contrôle passe ensuite à l'étape F2 de l'organigramme de la figure 1 dans laquelle la décharge de la batterie est commandée de la manière décrite ci-dessus. L'étape F2 sera maintenue tant que la tension U mesurée en continu aux bornes de la batterie pendant sa décharge reste supérieure à U_{Smin}, c'est-à-dire ici supérieure à 1,8V. Lorsque la tension U devient inférieure ou égale à 1,8V, le dispositif de contrôle passe à l'étape F3 de charge de la batterie au cours de laquelle le dispositif de contrôle commande, comme décrit précédemment, la charge de la batterie jusqu'à un niveau de pleine charge. Lorsque l'état de pleine charge de la batterie est atteint, le dispositif de contrôle retourne automatiquement à l'étape F2. Dans la suite du procédé, les étapes F2 et F3 s'enchaînent alternativement par commande du dispositif de contrôle.

Dans une variante du procédé de gestion de la batterie, une étape (non représentée) peut être intercalée entre les étapes F2 et F3 pour réaliser la déconnexion de la batterie, notamment lorsque il est bénéfique pour la batterie de subir un temps de repos.

Il va de soi que le dispositif de contrôle peut indifféremment passer directement à l'étape F3 en sortie de l'étape F1 s'il constate ou s'il a connaissance que la batterie est vide ou partiellement vide au début du procédé, avant de passer à l'étape F2. Par la suite, l'enchaînement alternatif des étapes F2 et F3 est commandé par le dispositif de contrôle.

La figure 2 illustre, sous forme d'organigramme, que pendant l'étape de décharge F2 apparente sur l'organigramme de la figure 1, dans une étape F4, le dispositif de contrôle réalise la mesure de la tension U aux bornes de la batterie. Dans une étape F5, le dispositif de contrôle compare la tension U à la valeur U_{Smin} initialisée pendant l'étape F1. Si la tension U est supérieure à U_{Smin} (sortie non de l'étape F5), le dispositif de contrôle retourne à l'étape F4 et la batterie continue de se décharger. Par contre, si la tension U est inférieure ou égale à U_{Smin} (sortie oui de l'étape F5), le dispositif de contrôle passe à une étape F6 dans laquelle il enregistre que la décharge de la batterie est terminée. Le passage de l'étape F4 à l'étape F5 est réalisé automatiquement suivant une fréquence prédéterminée.

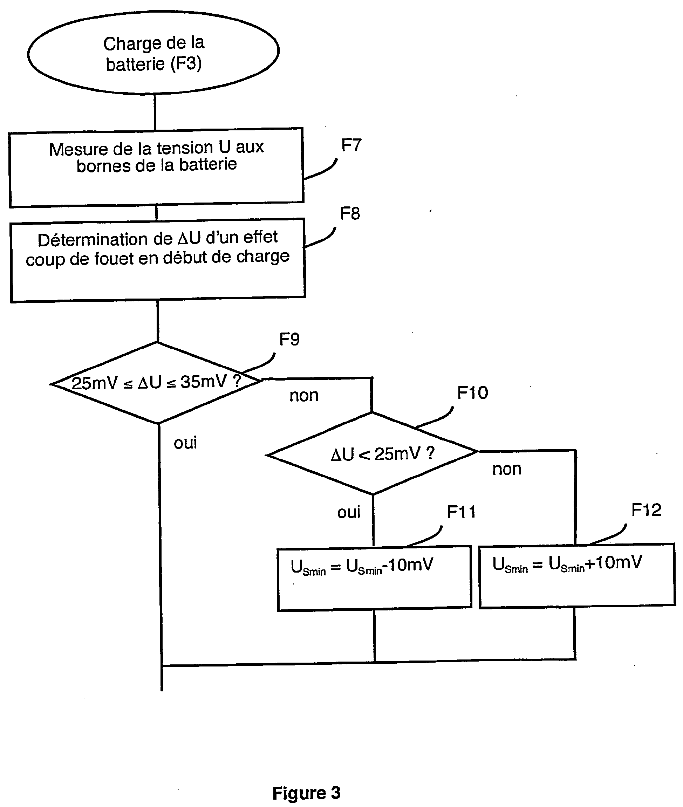

La figure 3 illustre, sous forme d'organigramme, que pendant l'étape de charge F3 apparente sur l'organigramme de la figure 1, dans une première étape F7, le dispositif de contrôle réalise la mesure de la tension U aux bornes de la batterie. Après une période de temps suffisante pour permettre l'apparition d'un effet coup de fouet (de l'ordre de quelques minutes), le dispositif de contrôle détermine, dans une étape F8, au moins un paramètre électrique représentatif de l'effet coup de fouet.

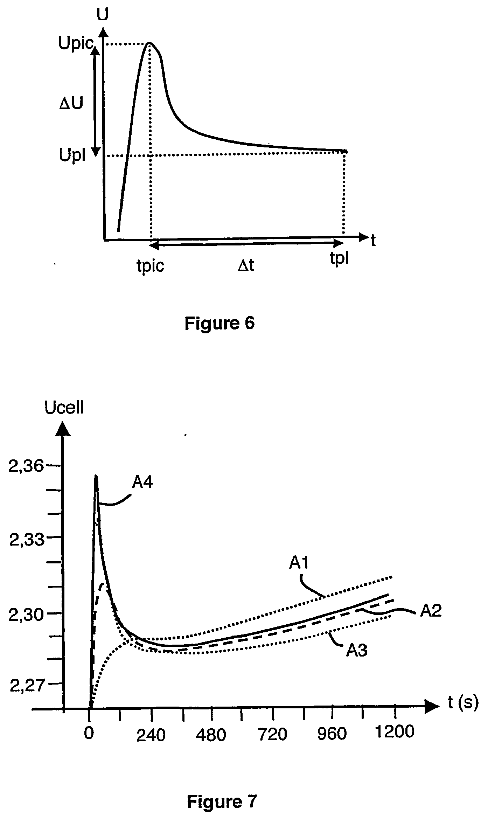

Comme illustré à la figure 6, qui représente les variations, en fonction du temps t, de la tension U aux bornes d'une batterie complètement déchargée lors d'une charge partielle, un effet coup de fouet en charge est observable en début de charge d'une batterie préalablement suffisamment déchargée. Le coup de fouet en charge est caractérisé par un pic de tension aux bornes de la batterie dans une première phase de la charge d'une batterie suffisamment déchargée, avant une redescente de la tension jusqu'à un plateau pendant la phase suivante. Le coup de fouet peut être caractérisé par différents paramètres, comme par exemple la tension de pic Upic, la tension de plateau Upl, la différence ΔU = Upic-Upl entre la tension de pic et la tension de plateau, le temps de pic tpic, nécessaire pour atteindre la tension de pic Upic depuis le début de la charge, le temps de plateau tpl, nécessaire pour atteindre la tension de plateau Upl, et/ou la différence Δt = tpl-tpic entre le temps de plateau et le temps de pic.

La figure 7 représente l'évolution des paramètres électriques d'un effet coup de fouet en charge pour un élément de batterie de type plomb-acide, lors de charges partielles réalisées dans des conditions similaires, à la suite de décharges interrompues respectivement à des seuils de tension de 1,95V (courbe A1), 1,90V (courbe A2), 1,80V (courbe A3), et 1,70V (courbe A4). Ces courbes illustrent le lien existant entre les paramètres représentatifs d'un effet coup de fouet en charge et les conditions de la décharge précédente, plus particulièrement en fonction du seuil de fin de décharge, autrement dit de la profondeur de décharge atteinte. En particulier, plus le seuil de tension de fin de décharge est bas, c'est-à-dire plus la profondeur de décharge est importante, et plus l'amplitude de l'effet du coup de fouet en charge (Upic et/ou ΔU) est importante.

Dans l'étape F8 (figure 3), le dispositif de contrôle détermine un paramètre électrique représentatif de l'un des paramètres représentatifs de l'effet coup de fouet apparu lors de la mesure de la tension U en début de charge, c'est-à-dire pendant l'étape F7, par exemple un paramètre électrique représentatif de la différence ΔU de l'effet coup de fouet apparu pendant l'étape F7. Par simplification, le paramètre électrique représentatif du paramètre ΔU de l'effet coup de fouet correspond à la valeur de ΔU.

Le dispositif de contrôle réalise ensuite, dans une étape F9, une comparaison entre la valeur de ΔU calculée et une plage de valeurs prédéterminée, par exemple comprise entre 25mV et 35mV. Ces valeurs correspondent à un régime de courant appelé I₁₀, c'est-à-dire un régime de courant pour obtenir une décharge de batterie en 10 heures. L'Homme du métier saura adapter ces valeurs pour d'autres régimes de courant. Si ΔU est en dehors de cette plage de valeurs (sortie non de F9), le dispositif de contrôle passe à une étape F10 dans laquelle ΔU est comparée à la borne inférieure de la plage de valeurs prédéterminée, c'est-à-dire à 25mV. Si ΔU est supérieure à 25mV (sortie non de F10), ΔU est donc supérieure à 35mV (puisque d'après F9, ΔU n'est pas dans la plage comprise entre 25mV et 35mV). Le dispositif de contrôle passe alors à une étape F12 dans laquelle le seuil de fin de décharge U_{Smin} est relevé d'une première valeur prédéterminée, par exemple égale à 10mV. Au contraire, si ΔU est inférieure à 25mV (sortie oui de F10), le dispositif de contrôle passe à une étape F11 dans laquelle le seuil de fin de décharge U_{Smin} est abaissé d'une deuxième valeur prédéterminée, par exemple égale à 10mV.

Par contre, si à l'étape F9, le dispositif de contrôle constate que ΔU est comprise dans la plage de valeurs comprise entre 25mV et 35mV, aucune modification n'est apportée au seuil de fin de décharge U_{Smin}.

En d'autres termes, durant l'étape F3 apparente sur l'organigramme de la figure 1, le dispositif de contrôle réalise les étapes suivantes :
- une charge de la batterie,
- la détermination, pendant ladite charge, d'un paramètre électrique ΔU représentatif d'un effet coup de fouet en charge,
- une comparaison dudit paramètre ΔU avec une caractéristique prédéterminée (plage de valeurs comprise entre 25mV et 35mV),
- une actualisation éventuelle, en fonction du résultat de ladite comparaison, du seuil de fin de décharge U_{Smin} à utiliser lors d'une décharge ultérieure.
L'actualisation du seuil de fin de décharge U_{Smin} consiste à :
- relever le seuil de fin de décharge U_{Smin} d'une première valeur prédéterminée (10mV) lorsque le paramètre ΔU est supérieur à ladite plage de valeurs,
- abaisser le seuil de fin de décharge U_{Smin} d'une deuxième valeur prédéterminée (10mV) lorsque le paramètre ΔU est inférieur à ladite plage de valeurs.

Ces étapes successives sont réalisées à la suite de chaque décharge (étape F2) de la batterie jusqu'au seuil de fin de décharge U_{Smin}. Par conséquent, le seuil de fin de décharge U_{Smin} utilisé pendant chaque étape de décharge F2 du procédé de gestion de l'organigramme de la figure 1 est éventuellement actualisé (étapes F11 et F12) pendant l'étape de charge F3 suivante afin de modifier, si nécessaire, le seuil de fin de décharge U_{Smin} qui sera utilisé pendant l'étape de décharge F2 du cycle suivant. Le procédé de gestion de la batterie (enchaînement de cycles comprenant une charge F3 et une décharge F2) incorpore donc un procédé de détermination du seuil de fin de décharge U_{Smin} qui est réalisé à chaque cycle. Ce procédé de détermination s'applique en réalisant une éventuelle actualisation, au cours du premier cycle, du seuil de fin de décharge U_{Smin} initial initialisé durant l'étape F1 et, au cours des cycles suivants, du seuil de fin de charge U_{Smin} utilisé au cycle précédent.

Dans l'étape F8, en variante, le dispositif de contrôle peut déterminer un paramètre électrique représentatif d'un autre paramètre de l'effet coup de fouet, par exemple de la tension de pic Upic. Les étapes F9 à F12 doivent être modifiées en conséquence, notamment en ce qui concerne la valeur des bornes de la plage de valeurs utilisée dans les étapes F9 et F10, par exemple sur la base de la figure 7. Le paramètre Upic reste cependant moins intéressant que ΔU car il dépend du vieillissement de la batterie.

Ce procédé de détermination du seuil de fin de décharge U_{Smin} débute à la fin de la décharge de chaque cycle de charge/décharge, pour connaître le seuil de fin de décharge U_{Smin} à utiliser lors de la décharge du cycle suivant. Il présente notamment l'avantage d'adapter le seuil de fin de décharge U_{Smin} durant toute la durée de vie de la batterie en prenant en compte l'impact des conditions des cycles antérieurs. Il est ainsi possible de prendre en considération l'ensemble de l'historique électrique de la batterie pour optimiser le seuil de fin de décharge U_{Smin} à appliquer à chaque cycle, et ainsi d'optimiser la fiabilité, la durée de vie et les performances de la batterie. De plus, la détermination du seuil de fin de décharge U_{Smin} à appliquer à chaque cycle est réalisée en début de ce cycle directement par une simple analyse de la réponse en tension aux bornes de la batterie (c'est-à-dire l'analyse de l'effet coup de fouet en début de charge), analyse pratiquée pendant et grâce à la charge de ce cycle et ne nécessitant donc aucune étape superflue.

Néanmoins, l'analyse des paramètres électriques représentatifs de l'effet coup de fouet en charge mesurés lors d'une charge au moins partielle de la batterie, peut être utilisée pour choisir la stratégie de charge à utiliser lors d'une étape de charge ultérieure de la batterie. De manière générale, tous les types de stratégie de charge peuvent être utilisés. Les stratégies de charge standard comportent classiquement des phases successives durant lesquelles la charge est contrôlée en courant ou en tension. Ces phases sont généralement interrompues sur des critères d'arrêt en fonction de seuils de tension ou de quantités de charge. Une nouvelle stratégie de charge, basée sur la profondeur de décharge (elle-même fonction du seuil de fin de décharge U_{Smin}), déterminée sur la base des paramètres électriques représentatifs de l'effet coup de fouet en charge observé en début de charge de la batterie, peut, par exemple, consister à ajouter une phase de surcharge à la suite d'une procédure de charge standard, à appliquer une charge forcée ("boost charge") ou un courant pulsé.

La détermination du seuil de fin de décharge U_{Smin} initial (à utiliser par exemple dans l'étape F1 de l'organigramme de la figure 1) d'un nouveau type de batterie représente, dans les techniques connues, une étape longue et coûteuse du développement de ce nouveau type de batterie. En effet, il est nécessaire de déterminer le seuil de fin de décharge U_{Smin} initial pour tous les régimes de décharge envisageables. Les figures 4 et 5 illustrent, sous forme d'organigrammes, deux procédés pour la détermination du seuil de fin de décharge U_{Smin} initial d'un nouveau type de batterie, qui permettent de répondre aux problèmes ci-dessus. Le procédé de la figure 4 reprend le même principe général de détermination que celui de la figure 3. Le procédé de la figure 5 constitue, quant à lui, une variante permettant de déterminer le seuil de fin de décharge en calculant la moyenne de deux seuils de fin de décharge actualisés en utilisant le principe de base de l'invention.

Le procédé de la figure 4 s'applique à une batterie préalablement chargée. Dans une étape F13, le dispositif de contrôle initialise le seuil de fin de décharge U_{Smin} à une valeur arbitraire, par exemple égale à 1,9V. Dans une étape F14, le dispositif de contrôle réalise une décharge de la batterie jusqu'à ce que la tension U à ses bornes atteigne 1,9V. Cette étape F14 est identique à l'étape F2 du procédé de gestion de la figure 1 et se déroule selon les étapes F4 à F6 de la figure 2. Puis, dans une étape F15, le dispositif de contrôle réalise une charge partielle de la batterie et la mesure de la tension U aux bornes de la batterie. Cette charge partielle est réalisée pendant une période de temps suffisante pour permettre l'apparition d'un effet coup de fouet (de l'ordre de quelques minutes). Le dispositif de contrôle détermine alors, dans une étape F16, au moins un paramètre électrique représentatif de l'effet coup de fouet. Plus précisément, le dispositif de contrôle détermine un paramètre électrique représentatif de l'un des paramètres représentatifs de l'effet coup de fouet apparu lors de la mesure de la tension U pendant la charge partielle, par exemple un paramètre électrique représentatif de la différence ΔU de l'effet coup de fouet apparu pendant l'étape F15. Par simplification, le paramètre électrique représentatif du paramètre ΔU de l'effet coup de fouet correspond à la valeur de ΔU.

Le dispositif de contrôle réalise ensuite, dans une étape F17, une comparaison entre la valeur de ΔU calculée et une plage de valeurs prédéterminée, par exemple comprise entre 25mV et 35mV. Si ΔU est en dehors de cette plage de valeurs (sortie non de F17), le dispositif de contrôle passe à une étape F18 dans laquelle ΔU est comparée à la borne inférieure de la plage de valeurs prédéterminée, c'est-à-dire à 25mV. Si ΔU est supérieure à 25mV (sortie non de F18), ΔU est donc supérieure à 35mV (puisque d'après F17, ΔU n'est pas dans la plage comprise entre 25mV et 35mV). Le dispositif de contrôle passe à une étape F20 dans laquelle le seuil de fin de décharge U_{Smin} est relevé d'une première valeur prédéterminée, par exemple égale à 10mV. Au contraire, si ΔU est inférieure à 25mV (sortie oui de F18), le dispositif de contrôle passe à une étape F19 dans laquelle le seuil de fin de décharge U_{Smin} est abaissé d'une deuxième valeur prédéterminée, par exemple égale à 10mV. En sortie des étapes F19 et F20, le dispositif de contrôle revient à l'étape F14 et reproduit les étapes suivantes F15 à F17.

Par contre, si à l'étape F17, le dispositif de contrôle constate que ΔU est comprise dans la plage de valeurs comprise entre 25mV et 35mV, aucune actualisation n'est apportée au seuil de fin de décharge U_{Smin}. Le procédé de la figure 4 est alors terminé et le seuil de fin de décharge U_{Smin} initial d'un nouveau type de batterie est déterminé.

Ce procédé de détermination du seuil de fin de décharge initial d'un nouveau type de batterie est terminé lorsque le dispositif de contrôle quitte l'étape F17 par la sortie « oui ». Les étapes successives F14 à F17 sont donc réalisées une seule fois si le seuil de fin de décharge U_{Smin} initialisé dans l'étape F13 permet directement d'obtenir une différence ΔU comprise entre 25mV et 35mV. Dans le cas contraire, le dispositif de contrôle quitte l'étape F17 par la sortie « non » pour réaliser l'étape F18 puis l'étape F19 ou F20. Les étapes F18 à F20 assurent une actualisation du seuil de fin de décharge. À la suite de l'actualisation, le dispositif de contrôle réalise à nouveau les étapes F14 à F17. Ce bouclage est réalisé tant que le seuil de fin de décharge U_{Smin} ne permet pas d'obtenir, dans l'étape F16, une différence ΔU comprise entre 25mV et 35mV.

En d'autres termes, durant le procédé de la figure 4, le dispositif de contrôle réalise les étapes suivantes :
- une décharge F14 de la batterie jusqu'au seuil initialisé à l'étape F13,
- une charge partielle F15 de la batterie,
- la détermination F16, pendant ladite charge, d'un paramètre électrique ΔU représentatif d'un effet coup de fouet en charge,
- une comparaison F17 dudit paramètre ΔU avec une caractéristique prédéterminée (plage de valeurs comprise entre 25mV et 35mV),
- une actualisation F18, F19, F20 éventuelle, en fonction du résultat de ladite comparaison, du seuil de fin de décharge U_{Smin}.
L'actualisation éventuelle du seuil de fin de décharge U_{Smin} consiste à :
- relever F20 le seuil de fin de décharge U_{Smin} d'une première valeur prédéterminée (10mV) lorsque le paramètre ΔU est supérieur à ladite plage de valeurs,
- abaisser F19 le seuil de fin de décharge U_{Smin} d'une deuxième valeur prédéterminée (10mV) lorsque le paramètre ΔU est inférieur à ladite plage de valeurs.

Dans l'étape F16, le dispositif de contrôle peut déterminer peut déterminer un paramètre électrique représentatif d'un autre paramètre de l'effet coup de fouet, par exemple de la tension de pic Upic. Les étapes F17 à F20 doivent être modifiées en conséquence, notamment en ce qui concerne la valeur des bornes de la plage de valeurs utilisée dans les étapes F17 et F18.

Le procédé de la figure 5 pour la détermination du seuil de fin de décharge U_{Smin} initial d'un nouveau type de batterie est une variante réalisée en calculant la moyenne de deux seuils de fin de décharge U_{Smin1} et U_{Smin2} éventuellement actualisés en utilisant le principe de base de l'invention. Le procédé de la figure 5 s'applique à une batterie préalablement chargée. Dans une étape F21, le dispositif de contrôle initialise un premier seuil de fin de décharge U_{Smin1} et un deuxième seuil de fin de décharge U_{Smin2} à des valeurs arbitraires, par exemple respectivement égales à 1,95V et 1,65V. Dans une étape F22, le dispositif de contrôle réalise une décharge de la batterie jusqu'à ce que la tension U à ses bornes atteigne U_{Smin1}, c'est-à-dire 1,95V. Cette étape F22 est identique à l'étape F2 du procédé de gestion de la figure 1 et se déroule selon les étapes F4 à F6 de la figure 2. Puis, dans une étape F23, le dispositif de contrôle réalise une charge partielle de la batterie et la mesure de la tension U aux bornes de la batterie. Cette charge partielle est réalisée pendant une période de temps suffisante pour permettre l'apparition d'un effet coup de fouet en charge (de l'ordre de quelques minutes). Le dispositif de contrôle détermine alors, dans une étape F24, au moins un paramètre électrique représentatif de l'effet coup de fouet. Plus précisément, le dispositif de contrôle détermine un paramètre électrique représentatif de l'un des paramètres représentatifs de l'effet coup de fouet apparu lors de la mesure de la tension U pendant la charge partielle, par exemple un paramètre électrique représentatif de la différence ΔU₁ de l'effet coup de fouet apparu pendant l'étape F23. Par simplification, le paramètre électrique représentatif du paramètre ΔU₁ de l'effet coup de fouet correspond à la valeur de ΔU₁.

Le dispositif de contrôle réalise ensuite, dans une étape F25, une comparaison entre la valeur de ΔU₁ calculée et une valeur de seuil unique prédéterminée, par exemple de 30mV. Si ΔU₁ est supérieure ou égale à cette valeur de seuil (sortie non de F25), le dispositif de contrôle passe à une étape F26 dans laquelle le seuil de fin de décharge U_{Smin1} est relevé d'une troisième valeur prédéterminée, par exemple égale à 10mV. En sortie de l'étape F26, le dispositif de contrôle revient à l'étape F22 et reproduit les étapes suivantes F23 à F25.

Par contre, si à l'étape F25, le dispositif de contrôle constate que ΔU est inférieure à 30mV (sortie « oui » de F25), aucune actualisation n'est apportée au premier seuil de fin de décharge U_{Smin1}.

La première partie du procédé de détermination du seuil de fin de décharge initial d'un nouveau type de batterie est terminée lorsque le dispositif de contrôle quitte l'étape F25 par la sortie « oui ». Les étapes successives F22 à F25 sont donc réalisées une seule fois si le seuil de fin de décharge U_{Smin1} initialisé dans l'étape F21 permet directement d'obtenir une différence ΔU₁ inférieure à 30mV. Dans le cas contraire, le dispositif de contrôle quitte l'étape F25 par la sortie « non » pour réaliser l'étape F26 qui assure une actualisation du seuil de fin de décharge U_{Smin1}. À la suite de l'actualisation, le dispositif de contrôle réalise à nouveau les étapes F22 à F25. Ce bouclage est réalisé tant que le premier seuil de fin de décharge U_{Smin1} ne permet pas d'obtenir, dans l'étape F24, une différence ΔU₁ inférieure à 30mV.

Lorsque la première partie du procédé de la figure 5 est terminée, dans une étape F27, le dispositif de contrôle réalise une décharge de la batterie jusqu'à ce que la tension U à ses bornes atteigne U_{Smin2}, c'est-à-dire 1,65V. Cette étape F27 est identique à l'étape F2 du procédé de gestion de la figure 1 et se déroule selon les étapes F4 à F6 de la figure 2. Puis, dans une étape F28, le dispositif de contrôle réalise une charge partielle de la batterie et la mesure de la tension U aux bornes de la batterie. Cette charge partielle est réalisée pendant une période de temps suffisante pour permettre l'apparition d'un effet coup de fouet en charge (de l'ordre de quelques minutes). Le dispositif de contrôle détermine alors, dans une étape F29, un paramètre électrique représentatif, par exemple, du paramètre ΔU₂ de l'effet coup de fouet, lequel paramètre électrique correspond, par exemple, à la valeur de ΔU₂.

Le dispositif de contrôle réalise ensuite, dans une étape F30, une comparaison entre la valeur de ΔU₂ calculée et la valeur de seuil unique égale à 30mV. Si ΔU₂ est inférieure à cette valeur de seuil (sortie « non » de F30), le dispositif de contrôle passe à une étape F31 dans laquelle le seuil de fin de décharge U_{Smin2} est abaissé d'une quatrième valeur prédéterminée, par exemple égale à 10mV. En sortie de l'étape F31, le dispositif de contrôle revient à l'étape F27 et reproduit les étapes suivantes F28 à F30.

Par contre, si à l'étape F30, le dispositif de contrôle constate que ΔU₂ est supérieure ou égale à 30mV (sortie « oui » de F30), aucune actualisation n'est apportée au deuxième seuil de fin de décharge U_{Smin2}.

La deuxième partie du procédé de détermination du seuil de fin de décharge initial d'un nouveau type de batterie est terminée lorsque le dispositif de contrôle quitte l'étape F30 par la sortie « oui ». Les étapes successives F27 à F30 sont donc réalisées une seule fois si le deuxième seuil de fin de décharge U_{Smin2} initialisé dans l'étape F21 permet directement d'obtenir une différence ΔU₂ supérieure ou égale à 30mV. Dans le cas contraire, le dispositif de contrôle quitte l'étape F30 par la sortie « non » pour réaliser l'étape F31 qui assure une actualisation du seuil de fin de décharge U_{Smin2}. À la suite de l'actualisation, le dispositif de contrôle réalise à nouveau les étapes F27 à F30. Ce bouclage est réalisé tant que le deuxième seuil de fin de décharge U_{Smin2} ne permet pas d'obtenir, dans l'étape F29, une différence ΔU₂ supérieure ou égale à 30mV.

Lorsque la deuxième partie du procédé de la figure 5 est terminée, dans une étape F32, le dispositif de contrôle réalise une moyenne des premier et deuxième seuils de fin de décharge U_{Smin1} et U_{Smin2}. Le procédé de la figure 5 est alors terminé et le seuil de fin de décharge U_{Smin} initial d'un nouveau type de batterie est déterminé et correspond à la moyenne calculée. L'étape F32 constitue la troisième étape du procédé de la figure 5.

En d'autres termes, le procédé de la figure 5 pour la détermination du seuil de fin de décharge U_{Smin} initial d'un nouveau type de batterie consiste à :
- décharger F22 la batterie jusqu'à un premier seuil de fin de décharge U_{Smin1} prédéfini et actualiser F26 ledit premier seuil de fin de décharge U_{Smin1} en fonction du résultat de la comparaison F25 du paramètre ΔU₁ représentatif de l'effet coup de fouet à une valeur de seuil (30mV),
- décharger F27 la batterie jusqu'à un deuxième seuil de fin de décharge U_{Smin2} prédéfini inférieur au premier seuil de fin de décharge U_{Smin1} prédéfini et actualiser F31 ledit deuxième seuil de fin de décharge U_{Smin2} en fonction du résultat de la comparaison F30 du paramètre ΔU₂ représentatif de l'effet coup de fouet à ladite valeur de seuil (30mV),
- déterminer le seuil de fin de fin de décharge U_{Smin} initial, à utiliser initialement lors de l'utilisation d'une batterie de ce type, en calculant F32 la moyenne des premier et deuxième seuils de fin de décharge U_{Smin1} et U_{Smin2} éventuellement actualisés.
L'actualisation du premier seuil de fin de décharge U_{Smin1} consiste à relever F26 ledit premier seuil de fin de décharge U_{Smin1} d'une troisième valeur (10mV) prédéterminée si le paramètre ΔU₁ est supérieur ou égal à la valeur de seuil (30mV). L'actualisation du deuxième seuil de fin de décharge U_{Smin2} consiste à abaisser F31 ledit deuxième seuil de fin de décharge U_{Smin2} d'une quatrième valeur (10mV) prédéterminée si le paramètre ΔU₂ est inférieur à la valeur de seuil (30mV).

Par conséquent, les procédés des figures 1, 4 et 5 incorporent chacun au moins un procédé de détermination du seuil de fin de décharge U_{Smin} comportant les étapes suivantes :
- une décharge F2, F14, F22, F27 de la batterie jusqu'à un seuil prédéfini de fin de décharge U_{Smin}, U_{Smin1}, U_{Smin2},
- une charge F3, F15, F23, F28 au moins partielle de la batterie,
- la détermination F8, F16, F24, F29, pendant ladite charge, d'un paramètre électrique ΔU représentatif d'un effet coup de fouet en charge,
- une comparaison F9, F10, F17, F18, F25, F30 dudit paramètre avec une caractéristique prédéterminée,
- une actualisation éventuelle F11, F12, F19, F20, F26, F31, en fonction du résultat de ladite comparaison, du seuil de fin de décharge U_{Smin} à utiliser lors d'une décharge ultérieure.

Les procédés de détermination décrits ci-dessus s'appliquent à tout type de batteries. Ils sont en particulier bien adaptés à la gestion de la décharge de batteries plomb-acide, dont l'usage est répandu dans les applications pour lesquelles la production d'énergie est intermittente afin d'adapter la production énergétique à la demande, par exemple dans les applications photovoltaïques.

De manière générale, tous les types de charge ou de décharge peuvent être utilisés dès lors qu'un effet coup de fouet en charge est observable, en tenant compte du type de batterie et/ou du type d'application dans laquelle cette batterie est utilisée. De manière connue, la tension aux bornes de la batterie (et éventuellement le courant) de charge et de décharge est contrôlée et/ou mesurée pendant la charge et la décharge. De même, tous les critères de fin de charge peuvent être utilisés, basés à titre d'exemple sur des seuils de tension ou sur des profils temporels de tension et/ou de courant.

## Revendications

1. Procédé de détermination du seuil de tension de fin de décharge d'une batterie rechargeable, **caractérisé en ce qu'**il comporte l'ensemble d'étapes successives suivantes :
- une décharge (F2, F14, F22, F27) de la batterie jusqu'à un seuil de tension de fin de décharge prédéfini (U_{Smin}, U_{Smin1}, U_{Smin2}),
- une charge (F3, F15, F23, F28) au moins partielle de la batterie,
- la détermination (F8, F16, F24, F29), au début de ladite charge, d'un paramètre électrique (ΔU) représentatif d'un effet coup de fouet en charge,
- une comparaison (F9, F10, F17, F18, F25, F30) dudit paramètre avec une caractéristique prédéterminée constituée par une valeur de seuil ou une plage de valeurs,
- une actualisation (F11, F12, F19, F20, F26, F31), en fonction du résultat de ladite comparaison, du seuil de tension de fin de décharge (U_{Smin}, U_{Smin1}, U_{Smin2}) à utiliser lors d'une décharge ultérieure.

2. Procédé selon la revendication 1, **caractérisé en ce que** le paramètre (ΔU) est représentatif de la différence (ΔU) entre la tension de pic (Upic) et la tension de plateau (Upl) de l'effet coup de fouet en charge.

3. Procédé selon l'une des revendications 1 et 2, **caractérisé en ce que** la caractéristique prédéterminée est constituée par une plage de valeurs, l'actualisation du seuil de tension de fin de décharge (U_{Smin}) consistant à :
- relever le seuil de tension de fin de décharge (U_{Smin}) d'une première valeur prédéterminée lorsque le paramètre (ΔU) est supérieur à ladite plage de valeurs,
- abaisser le seuil de tension de fin de décharge (U_{Smin}) d'une deuxième valeur prédéterminée lorsque le paramètre (ΔU) est inférieur à ladite plage de valeurs.

4. Procédé selon la revendication 3, **caractérisé en ce que** la plage de valeurs est comprise entre 25mV et 35mV.

5. Procédé selon l'une des revendications 3 et 4, **caractérisé en ce que** la première valeur prédéterminée est égale à 10mV.

6. Procédé selon l'une des revendications 3 à 5, **caractérisé en ce que** la deuxième valeur prédéterminée est égale à 10mV.

7. Procédé selon l'une des revendications 1 et 2, **caractérisé en ce que**, la batterie rechargeable étant une batterie d'un type nouveau, le procédé est utilisé pour la détermination du seuil de tension de fin de décharge (U_{Smin}) initial à utiliser initialement lors de l'utilisation d'une batterie de ce type, et **en ce que** la caractéristique prédéterminée est constituée par une valeur de seuil unique, procédé consistant à :
- réaliser au moins une fois ledit ensemble d'étapes successives avec un premier seuil de tension de fin de décharge (U_{Smin1}) prédéfini jusqu'à ce que le paramètre électrique (ΔU₁) représentatif d'un effet coup de fouet en charge soit inférieur à ladite valeur de seuil unique, dans chaque ensemble d'étapes successives l'actualisation du premier seuil de tension de fin de décharge (U_{Smin1}) consistant à relever ledit premier seuil de tension de fin de décharge (U_{Smin1}) d'une troisième valeur prédéterminée si le paramètre (ΔU₁) est supérieur ou égal à la valeur de seuil,
- réaliser au moins une fois ledit ensemble d'étapes successives avec un deuxième seuil de fin de décharge (U_{Smin2}) prédéfini jusqu'à ce que le paramètre électrique (ΔU₂) représentatif d'un effet coup de fouet en charge soit supérieur ou égal à ladite valeur de seuil unique, dans chaque ensemble d'étapes successives l'actualisation du deuxième seuil de tension de fin de décharge (U_{Smin2}) consistant à abaisser ledit deuxième seuil de tension de fin de décharge (U_{Smin2}) d'une quatrième valeur prédéterminée si le paramètre (ΔU₂) est inférieur à la valeur de seuil,
- déterminer le seuil de tension de fin de fin de décharge (U_{Smin}) initial en calculant la moyenne des premier et deuxième seuils de tension de fin de décharge (U_{Smin1}, U_{Smin2}) éventuellement actualisés.

8. Procédé selon la revendications 7, **caractérisé en ce que** la valeur de seuil est de 30mV.

9. Procédé selon l'une des revendications 7 et 8, **caractérisé en ce que** la troisième valeur prédéterminée est égale à 10mV.

10. Procédé selon l'une des revendications 7 à 9, **caractérisé en ce que** la quatrième valeur prédéterminée est égale à 10mV.

11. Procédé selon l'une quelconque des revendications 1 à 10, **caractérisé en ce que** la batterie est une batterie au plomb.

## Patentansprüche

1. Verfahren zur Bestimmung der Entladungsendschwelle der Spannung eines Akkus,
**dadurch gekennzeichnet,**
**dass** es die Gesamtheit der folgenden aufeinanderfolgenden Verfahrensschritte enthält:
- eine Entladung (F2, F14, F22, F27) des Akkus bis zu einem zuvor festgelegten Entladungsende-Spannungsschwellenwert (U_{Smin}, U_{Smin1}, U_{Smin2},),
- eine zumindest teilweise Ladung (F3, F15, F23, F28) des Akkus,
- zu Beginn dieser Ladung die Bestimmung (F8, F16, F24, F29) eines elektrischen Parameters (ΔU), der einen Peitschenschlag-Belastungseffekt darstellt,
- einen Vergleich (F9, F10, F17, F18, F25, F30) dieses Parameters mit einem zuvor festgelegten Merkmal, welches von einen Schwellenwert oder einen Bereich von Werten gebildet wird,
- eine Aktualisierung (F11, F12, F19, F20, F26, F31) des bei einer weiteren Entladung zu verwendenden Entladungsende-Spannungsschwellenwerts (U_{Smin}, U_{Smin1}, U_{Smin2},) in Abhängigkeit von dem Ergebnis dieses Vergleichs.

2. Verfahren nach Anspruch 1,
**dadurch gekennzeichnet,**
**dass** der Parameter (ΔU) die Differenz (ΔU) zwischen der Spitzenspannung (Upic) und der Plateauspannung (Upl) des Peitschenschlag-Belastungseffekts darstellt.

3. Verfahren nach einem der Ansprüche 1 und 2,
**dadurch gekennzeichnet,**
**dass** das zuvor festgelegte Merkmal von einem Bereich von Werten gebildet wird, wobei die Aktualisierung des Entladungsende-Spannungsschwellenwerts (U_{Smin}) darin besteht:
- den Entladungsende-Spannungsschwellenwert (U_{Smin}) um einen ersten zuvor festgelegten Wert anzuheben, wenn der Parameter (ΔU) über dem genannten Bereich von Werten liegt,
- den Entladungsende-Spannungsschwellenwert (U_{Smin}) um einen zweiten zuvor festgelegten Wert abzusenken, wenn der Parameter (ΔU) unter dem genannten Bereich von Werten liegt.

4. Verfahren nach Anspruch 3,
**dadurch gekennzeichnet,**
**dass** der Bereich von Werten zwischen 25mV und 35mV liegt.

5. Verfahren nach einem der Ansprüche 3 und 4,
**dadurch gekennzeichnet,**
**dass** der erste zuvor festgelegte Wert 10mV beträgt.

6. Verfahren einem der Ansprüche 3 bis 5,
**dadurch gekennzeichnet,**
**dass** der zweite zuvor festgelegte Wert 10mV beträgt.

7. Verfahren nach einem der Ansprüche 1 und 2,
**dadurch gekennzeichnet,**
**dass,** da der Akku ein Akku eines neuen Typs ist, das Verfahren zur Bestimmung der Anfangs-Entladungsendschwelle der Spannung (U_{Smin}) angewendet wird, die bei Verwendung eines Akkus diesen Typs anfangs anzuwenden ist, und dass das zuvor festgelegte Merkmal von einem einzigen Schwellenwert gebildet wird, wobei das Verfahren darin besteht:
- mindestens ein Mal die genannte Gesamtheit aufeinanderfolgender Verfahrensschritte mit einem ersten zuvor festgelegten Entladungsende-Spannungsschwellenwert (U_{Smin1}) durchzuführen, bis der elektrische Parameter (ΔU₁), der einen Peitschenschlag-Belastungseffekt darstellt, unter dem genannten einzigen Schwellenwert liegt, wobei bei jeder Gesamtheit aufeinanderfolgender Verfahrensschritte die Aktualisierung des ersten Entladungsende-Spannungsschwellenwerts (U_{Smin1}) darin besteht, den genannten ersten Entladungsende-Spannungsschwellenwert (U_{Smin1}) um einen dritten zuvor festgelegten Wert anzuheben, wenn der Parameter (ΔU₁) über oder auf dem Schwellenwert liegt,
- mindestens ein Mal die genannte Gesamtheit aufeinanderfolgender Verfahrensschritte mit einem zweiten zuvor festgelegten Entladungsende-Spannungsschwellenwert (U_{Smin2}) durchzuführen, bis der elektrische Parameter (ΔU₂), der einen Peitschenschlag-Belastungseffekt darstellt, über oder auf dem genannten einzigen Schwellenwert liegt, wobei bei jeder Gesamtheit aufeinanderfolgender Verfahrensschritte die Aktualisierung des zweiten Entladungsende-Spannungsschwellenwerts (Uₛₘᵢₙ₂) darin besteht, den genannten zweiten Entladungsende-Spannungsschwellenwert (U_{Smin2}) um einen vierten zuvor festgelegten Wert abzusenken, wenn der Parameter (ΔU₂) unter dem Schwellenwert liegt,
- die Anfangs-Entladungsendschwelle der Spannung (U_{Smin}) zu bestimmen, indem der Durchschnittswert des ersten und des zweiten Entladungsende-Spannungsschwellenwerts (U_{Smin1}, U_{Smin2},), die ggf. aktualisiert sind, berechnet wird.

8. Verfahren nach Anspruch 7,
**dadurch gekennzeichnet,**
**dass** der Schwellenwert 30mV beträgt.

9. Verfahren nach einem der Ansprüche 7 und 8,
**dadurch gekennzeichnet,**
**dass** der dritte zuvor festgelegte Wert 10mV beträgt.

10. Verfahren nach einem der Ansprüche 7 bis 9,
**dadurch gekennzeichnet,**
**dass** der vierte zuvor festgelegte Wert 10mV beträgt.

11. Verfahren nach einem der Ansprüche 1 bis 10,
**dadurch gekennzeichnet,**
**dass** der Akku ein Bleiakku ist.

## Claims

1. Method for determining the end-of-discharge voltage threshold of a rechargeable battery, **characterized in that** it comprises the following set of successive steps:
- discharging (F2, F14, F22, F27) the battery up to a predefined end-of-discharge threshold (U_{Smin}, U_{Smin1}, U_{Smin2}),
- at least partial charging (F3, F15, F23, F28) of the battery,
- determining (F8, F16, F24, F29) an electrical parameter (ΔU) representative of a coup de fouet effect on charging, at the beginning of said charging,
- comparing (F9, F10, F17, F18, F25, F30) said parameter with a predetermined characteristic constituted by a threshold value or a range of values,
- updating (F11, F12, F19, F20, F26, F31) the end-of-discharge threshold (U_{Smin}, U_{Smin1}, U_{Smin2}) to be used for subsequent discharging, according to the result of said comparison.

2. Method according to claim 1, **characterized in that** the parameter (ΔU) is representative of the difference (ΔU) between the peak voltage (Upeak) and the plateau voltage (Upl) of the coup de fouet effect on charging.

3. Method according to one of claims 1 and 2, **characterized in that** the predetermined characteristic is constituted by a range of values, updating of the end-of-discharge threshold (U_{Smin}) consisting in:
- raising the end-of-discharge threshold (U_{Smin}) by a predetermined first value when the parameter (ΔU) is greater than said range of values,
- lowering the end-of-discharge threshold (U_{Smin}) by a predetermined second value when the parameter (ΔU) is lower than said range of values.

4. Method according to claim 3, **characterized in that** the range of values is comprised between 25mV and 35mV.

5. Method according to one of claims 3 and 4, **characterized in that** the predetermined first value is equal to 10mV.

6. Method according to one of claims 3 to 5, **characterized in that** the predetermined second value is equal to 10mV.

7. Method according to one of claims 1 and 2, **characterized in that**, the rechargeable battery being a battery of a new type, it is used for determining the initial end-of-discharge voltage threshold (U_{Smin}) to be used initially when using a battery of this type, and **in that** the predetermined characteristic is constituted by a single threshold value, method consisting in:
- performing said set of steps at least once with a predefined first end-of-discharge threshold (U_{Smin1}) until the electrical parameter (ΔU₁) representative of a coup de fouet effect on charging is lower than said single threshold value, in each set of steps updating of the first end-of-discharge threshold (U_{Smin1}) consisting in raising said first end-of-discharge threshold (U_{Smin1}) by a predetermined third value if the parameter (ΔU₁) is greater than the threshold value,
- performing said set of steps at least once with a predefined second end-of-discharge threshold (U_{Smin2}) until the electrical parameter (ΔU₂) representative of a coup de fouet effect on charging is greater than said single threshold value, in each set of steps updating of the second end-of-discharge threshold (U_{Smin2}) consisting in lowering said second end-of-discharge threshold (U_{Smin2}) by a predetermined fourth value if the parameter (ΔU₂) is lower than the threshold value,
- determining the initial end-of-discharge threshold (U_{Smin}) by computing the mean value of the first and second end-of-discharge thresholds (U_{Smin1}, U_{Smin2}) updated if applicable.

8. Method according to claim 7, **characterized in that** the threshold value is 30mV.

9. Method according to one of claims 7 and 8, **characterized in that** the predetermined third value is equal to 10mV.

10. Method according to one of claims 7 to 9, **characterized in that** the predetermined fourth value is equal to 10mV.

11. Method according to any one of claims 1 to 10, **characterized in that** the battery is a lead battery.
